# EUROPÄISCHE PATENTSCHRIFT

(11) **EP 2 048 405 B1**
(45) Veröffentlichungstag und Bekanntmachung des Hinweises auf die Patenterteilung: **04.05.2011**
(21) Anmeldenummer: 08017711.6
(22) Anmeldetag: 09.10.2008
(51) Int. Cl.: F16D 69/02

(54) **Sinterbremsbelag**
Sinter brake lining
Garniture de frein frittée

(30) Priorität: 10.10.2007 AT 16082007
(43) Veröffentlichungstag der Anmeldung: 15.04.2009
(73) Patentinhaber: Miba Frictec GmbH, 4663 Laakirchen (AT)
(72) Erfinder: Mayrhofer, Gerhard, 4222 St. Georgen / Gusen (AT)
(74) Vertreter: Ofner, Clemens

(56) Entgegenhaltungen:
- EP-A1- 0 508 423
- DATABASE WPI Week 200745 Thomson Scientific, London, GB; AN 2007-463013 XP002566691 & JP 2007 107066 A (AKEBONO BRAKE IND CO LTD) 26. April 2007 (2007-04-26) & JP 2007 107066 A (AKEBONO BRAKE IND) 26. April 2007 (2007-04-26)

## Beschreibung

Die Erfindung betrifft einen Sinterbremsbelag mit einem zylinderförmigen Reibelement aus einem ersten Sinterwerkstoff, der eine äußere Zylinderoberfläche und eine Zylinderhöhe aufweist, sowie mit einem das Reibelement einfassendes Verstärkungselement, das an der äußeren Zylinderoberfläche angeordnet ist und sich zumindest annähernd über die gesamte Zylinderhöhe erstreckt, wobei das Verstärkungselement aus einem weiteren Sinterwerkstoff mit einer metallischen Matrix gebildet ist, einen Bremsklotz umfassend eine Trägerplatte auf der mehrere Sinterbremsbeläge befestigt sind sowie eine Schienenfahrzeugscheibenbremse umfassend zumindest eine Bremsscheibe und zumindest einen Bremsklotz.

Die Belastung von Scheibenbremsen in Schienenfahrzeugen steigt ständig an. Der Grund dafür ist mannigfaltig. Einerseits werden immer höhere Geschwindigkeiten erzielt, andererseits steigen die abzubremsenden Wagengewichte oder es wird versucht, mit einer geringeren Anzahl an Scheibenbremsen die gleiche Bremswirkung zu erzielen. Dies alles führt zu einer zusätzlichen Erhöhung der umzuwandelnden Energie, was sich in noch höheren Temperaturen während des Bremsvorganges ausdrückt. Hier zeigen sich die Grenzen von organisch gebundenen Reibbelägen und daher werden für Hochleistungsbremsscheiben für Schienenfahrzeuge Bremsbeläge aus metallischen Reibwerkstoffen eingesetzt.

So ist z.B. aus der EP 0 106 782 B ein Scheibenbremsklotz für den Eisenbahngebrauch bekannt, mit einer starren Rückplatte, die eine obere Seite und eine untere Seite hat, mit einer Befestigungsklammer, die an der unteren Seite der Rückplatte befestigt ist, mit einer biegsamen, metallischen Tragplatte, die an der oberen Seite der Rückplatte befestigt ist, mit mehreren einzelnen Reibelementen, die jeweils an der biegsamen, metallischen Tragplatte mechanisch befestigt sind, damit sich die einzelnen Elemente biegen können, wenn sie eine Scheibe berühren, um ihnen zu ermöglichen, die Bremsfläche vollständiger zu berühren, wobei jedes Reibelement einen Bremsflächeninhalt von weniger als 12,6 cm² und ein Verhältnis von Höhe zu Bremsflächeninhalt von nicht mehr 0,6 hat. Das Reibmaterial der Reibelemente ist ein gesintertes, metallisches Material auf Eisenbasis. Es können weiters, mehrere einzelne metallische Behälter, die mit Reibmaterial gefüllt sind und an der oberen Seite der Rückplatte befestigt sind, verwendet werden.

Diese Anordnung von mehreren Reibelementen anstatt eines einzigen Reibblockes erweist sich besonders im Bezug auf die Funktionalität bei extremen Belastungen und im Bezug auf die erzielbare Performence unter nassen Bedingungen als vorteilhaft. Die Art der Anbringung auf der Trägerplatte reicht von Anschweißen der Reibelemente über Konstruktionen bei denen die Elemente über Zwischenplatten gehalten werden bis hin zum Anbringen der Reibelemente mittels Hochtemperaturlötverfahren.

Die innere Festigkeit der hergestellten Reibelemente reicht aber nicht, um den hohen Belastungen im Einsatz standhalten zu können. Eine Möglichkeit dies zu erreichen besteht darin, Ummantelungen aus Stahlblech in Form von Ringen oder Töpfen auszuführen, wie dies in der EP-A dargelegt ist. Dies birgt aber den Nachteil in sich, dass sich diese Bleche während des Bremsvorganges und dem daraus resultierenden Verschleiß aufbördeln. Dies führt dann zu einer Veränderung des Reibverhaltens und zur Beschädigung der Bremsscheibe.

Eine andere bekannte Möglichkeit ist die Verwendung von so genannten Verstärkungsringen, wie dies in der DE 41 11 926 A dargelegt ist. Diese DE-A beschreibt einen Multielemente Sinterbremsbelag für Teilbelagscheibenbremsen von insbesondere Schienenfahrzeugen, bestehend aus einer ein- oder mehrteiligen Trägerplatte auf deren der Reibfläche der Bremsscheibe zugewandten Vorderseite zylindrische Sinterelemente angeordnet sind und auf deren Rückseite ein Schwalbenschwanz zur Befestigung des Bremsbelages im Bremsbackenhalter vorgesehen ist, wobei die zylindrischen Sinterelemente jeweils mit einem Verstärkungsring versehen sind, welche auf der Trägerplatte und/oder mit dem Sinterelement fest verbunden sind und deren Höhe bis zur Verschleißgrenze reicht und wobei das Material der Verstärkungsringe etwa die gleichen Verschleiß- und Reibeigenschaften aufweist, wie die Sinterelemente. Der Verstärkungsring kann ebenfalls aus einem Sintermaterial bestehen, wobei es in diesem Falle möglich ist, den Verstärkungsring mit dem Sinterelement zu verlöten oder zusammenzusintern. Dazu wird das Material des Verstärkungsringes so gewählt, dass ein Ausdehnungskoeffizient den Schrumpfsitz zwischen Sinterelement und Verstärkungsring im Wesentlichen aufrechterhält. Um den Schrumpfsitz aufrecht zu halten ist es notwendig, dass sowohl der Verstärkungsring als auch die Reibelemente in etwa die gleichen Ausdehnungskoeffizienten aufweisen. Nachteilig ist daran, dass, wenn der Verschleiß des Bremsbelages dazu führt, dass die Bremsscheibe den Verstärkungsring berührt, es zu einer Veränderung des Bremsverhaltens durch das Material des Verstärkungsringes einerseits und andererseits durch die Veränderung, d.h., die Erhöhung der zur Verfügung stehenden Bremsfläche kommt. Zudem ist man mit dieser Ausführungsvariante auf wenige Materialkombinationen, welche aus obigen Gründen in etwa den gleichen Wärmeausdehungskoeffizienten aufweisen, beschränkt. Es wurde weiters in der DE 93 06 093 U dazu ausgeführt, dass beim Betrieb starke Vibrationen auftreten, die schließlich zum Bruch des Bremsbelages gemäß der DE 4111 926 A führen. Ebenso ist die Befestigung von Bremselementen und/oder deren Bodenplatten durch Schweißen alleine für die gewünschte Stabilität der Verbindung des Bremselementes an der Trägerplatte nicht ausreichend.

Zur Lösung dieses Problems schlägt die DE 93 06 093 U einen Bremsbelag für Scheibenbremsen, insbesondere für Hochgeschwindigkeitsschienenfahrzeuge, vor, mit einer ein- oder mehrteiligen Trägerplatte auf deren der Reibfläche der Bremsscheibe zugewandten Vorderseite einzelne Bremselemente angeordnet sind und auf deren abgewandten Rückseite eine Befestigung oder Führung für den Bremsbelag vorgesehen ist, wobei mindestens ein Bremselement mit einer Bodenplatte verbunden ist, die wiederum mit der Trägerplatte in Verbindung steht und die das Bremselement seitlich überragt und/oder Teil eines das Bremselement mantelförmig umhüllenden, zur Vorderseite hin offenen Korbes ist, wobei die auf der Trägerplatte aufgesetzte Bodenplatte des Korbes des Bremselementes an der Trägerplatte mittels einer ersten Verbindung und an ihrer dem Bremselement abgewandten Seite an der Trägerplatte mittels einer zweiten Verbindung befestigt ist, wobei eine der beiden Verbindungen als Schweißverbindung und die andere Verbindung als eine mechanische Verbindung ausgebildet ist oder beide Verbindungen als Schweißverbindungen ausgebildet sind, von denen die auf die Trägerplatte aufgesetzte Bodenplatte des Korbes sowohl an ihrem Umfangsmantel an mehreren Stellen durch Pressschweißen als auch durch Schutzgasschweißen an ihrer dem Bremselement abgewandten Seite mit der Trägerplatte verbunden ist.

Aufgabe vorliegender Erfindung ist es, einen Bremsbelag mit verbesserten Eigenschaften zur Verfügung zu stellen.

Gelöst wird diese Aufgabe dadurch, dass in der metallischen Matrix des weiteren Sinterwerkstoffes des Verstärkungselementes bei dem erfindungsgemäßen Sinterbremsbelag zumindest ein Abrasivstoff enthalten ist und der weitere Sinterwerkstoff eine höhere Festigkeit aufweist als der erste Sinterwerkstoff des Reibelementes sowie eigenständig durch einen Bremsklotz der die erfindungsgemäßen Sinterbremsbeläge umfasst bzw. durch eine Schienenfahrzeugscheibenbremse, wobei der der Bremsklotz erfindungsgemäß ausgebildet ist.

Von Vorteil ist dabei, dass, nachdem das Verstärkungselement bzw. der Verstärkungsring gleich hoch ist wie das eigentliche Reibelement an sich, dieses also von dem Verstärkungselement über die gesamte Höhe mantelförmig umgeben ist, auch das Verstärkungselement von Beginn an zum Reibwert- und Verschleißverhalten des Bremsbelages beiträgt und es somit während der gesamten Lebensdauer des Bremsbelages zu keiner Änderung des Reibwertverhaltens aufgrund veränderter Zusammensetzung an der Reiboberfläche bzw. aufgrund einer veränderten Bremsfläche kommt. Damit kann eine Beschädigung der Bremsscheiben, wie sie im Stand der Technik auftritt, verhindert werden. Zudem wird durch die höhere Festigkeit dieses Sinterwerkstoffes im Vergleich zum Sinterwerkstoff des Reibelementes letzterem eine entsprechende Stabilität gegeben, um dieses vor Zerstörung durch die auftretende Wärme beim Bremsen zu schützen. Es ist damit kein Schrumpfsitz des Reibelementes im Verstärkungselement an sich mehr erforderlich.

Der Anteil des Abrasivstoffes bzw. der Abrasivstoffe in dem weiteren Sinterwerkstoff kann ausgewählt sein aus einem Bereich mit einer unteren Grenze von 1 Gew.-% und einer oberen Grenze von 20 Gew.-%, wodurch das Reibverhalten des Verstärkungselementes entsprechend anpassbar ist. Unterhalb von 1 Gew.-% wird der Reibwert zu gering, sodass das Verstärkungselement nicht mehr in ausreichendem bzw. gewünschtem Ausmaß zum Reibverhalten des Bremsbelages beiträgt, oberhalb von 20 Gew.-% ist eine Verschlechterung der Festigkeit aufgrund eines zu geringen Anteils der metallischen Matrix am Sinterwerkstoff zu beobachten.

Insbesondere kann der Anteil des Abrasivstoffes bzw. der Abrasivstoffe in dem weiteren Sinterwerkstoff ausgewählt sein aus einem Bereich mit einer unteren Grenze von 7,5 Gew.-% und einer oberen Grenze von 20 Gew.-%

Bevorzugt wird, der zumindest eine Abrasivstoff ausgewählt aus einer Gruppe umfassend Karbide, wie Siliziumkarbid oder Titankarbid, Oxide, wie Korund (Al₂O₃) oder Chromoxid (Cr₂O₃) oder Zirkoniumoxid (ZrO₂), Silikate wie Quarzsand, sowie Mischungen daraus. Diese Abrasivstoffe weisen eine entsprechende gute thermische Stabilität auf, sodass der Sinterbremsbelag auch den höheren Temperaturen von Hochgeschwindigkeitszügen beim Bremsen standhält, ohne dass der Bremsbelag die gewünschte Festigkeit verliert.

Der Anteil der metallischen Matrix am weiteren Sinterwerkstoff kann mindestens 75 Gew.-% betragen. Unterhalb von 75 Gew.-% wurde ein Abfall der mechanischen Festigkeit beobachtet.

Vorzugsweise ist der Anteil der metallischen Matrix am weiteren Sinterwerkstoff des Verstärkungselementes ausgewählt aus einem Bereich mit einer unteren Grenze von 85. Gew.-% und einer oberen 95 Gew.-%.

Die metallische Matrix kann durch zumindest ein Metall oder einer Metalllegierung gebildet sein, das bzw. die eine Härte nach Rockwell aufweist, die ausgewählt ist aus einem Bereich mit einer unteren Grenze von 55 HRR und einer oberen Grenze von 90 HRR, wodurch nicht nur die Stabilität des Sinterbremsbelages verbessert werden kann, sondern auch das Reibverhalten des weiteren Sinterwerkstoffes, in dem die metallische Matrix in höheren Ausmaß an dem Reibverhalten teilnimmt.

Die metallische Matrix kann auch durch zumindest ein Metall oder eine Metalllegierung gebildet sein, das bzw. die eine Härte nach Rockwell aufweist, die ausgewählt ist aus einem Bereich mit einer unteren Grenze von 60 HRR und einer oberen Grenze von 80 HRR.

Bevorzugt wird die metallische Matrix aus zumindest einem Element aus einer Gruppe umfassend Kupfer, Eisen, oder deren Legierungen mit Zink oder Zinn, wie Messing oder Bronze, oder Mischungen daraus, gebildet, wodurch das Verschleißverhalten des Verstärkungselementes verbessert werden kann und zudem die Abrasivstoffe besser in der Matrix gehalten werden.

Das Verstärkungselement kann eine Wandstärke aufweisen, die ausgewählt ist aus einem Bereich mit einer unteren Grenze von 2 mm und einer oberen Grenze von 10 mm, wodurch ebenfalls eine Verbesserung der Festigkeit des Sinterbremsbelages und damit auch eine Verbesserung der Halterung des eigentlichen Reibelementes in diesem Verstärkungselement erreicht werden kann.

Insbesondere kann das Verstärkungselement eine Wandstärke aufweisen, die ausgewählt ist aus einem Bereich mit einer unteren Grenze von 3 mm und einer oberen Grenze von 5 mm.

Um das Verschleißverhalten des weiteren Sinterwerkstoffes des Verstärkungselementes zu verbessern, kann zumindest ein Anteil des Abrasivstoffes durch zumindest einen Festschmierstoff ersetzt sein.

Bevorzugt wird dieser Festschmierstoff ausgewählt aus einer Gruppe umfassend Sulfide, wie Molybdändisulfid, Wolframsulfid, Mangansulfid, Zinnsulfid, Kupfersulfid sowie Mischungen daraus, da diese Festschmierstoffe auch bei den auftretenden, hohen Temperaturen in Bremsen von Hochgeschwindigkeitszügen keine wesentliche Verschlechterung ihres Verhaltens und damit auch des Verschleißverhaltens des Verstärkungselementes zeigen.

Der zumindest eine Festschmierstoff kann einen Anteil am weiteren Sinterwerkstoff aufweisen, der ausgewählt ist aus einem Bereich mit einer unteren Grenze von 1 Gew.% und einer oberen Grenze von 7 Gew.-%, sodass das gewünschte Reib- und Verschleißverhalten des weiteren Sinterwerkstoffes an unterschiedlichste Sinterwerkstoffe für das Reibelement anpassbar ist.

Das Verstärkungselement kann stoffschlüssig, insbesondere vollflächig, mit dem Reibelement verbunden sein, wodurch eine weitere Verbesserung der mechanischen Stabilität des Sinterbremsbelages an sich erreicht werden kann.

Der Stoffschluss wird bevorzugt durch Verlöten des Reibelementes mit dem Verstärkungselement hergestellt, wobei ein folienartig ausgebildetes Lot zwischen dem Reibelement und dem 1, Verstärkungselement angeordnet wird, wodurch nicht nur eine einfache Herstellung der Sinterbremsbelages möglich ist, in dem diese Lötfolie einfach einlegbar ist, sondern damit durch die großflächige Verbindung des Reibelementes mit dem Verstärkungselement auch eine höherer mechanische Stabilität erreicht werden kann.

In einer Ausführungsvariante dazu ist es möglich, dass das folienartig ausgebildete Lot eine Höhe aufweist, die größer ist als die Zylinderhöhe des Reibelementes, insbesondere über eine Unterseite des Reibelementes vorragt, also jener Seite, die im eingebauten Zustand des Sinterbremsbelages nicht mit der Bremsscheibe zusammenwirkt, sodass diese Lötfolie gleichzeitig auch zur Verbindung des Sinterbremsbelages mit einer Trägerplatte verwendet werden kann und somit wiederum die Herstellung eines Bremsklotzes vereinfacht werden kann.

Das folienartig ausgebildete Lot kann eine Wandstärke aufweisen, die ausgewählt ist aus einem Bereich mit einer unteren Grenze von 0,05 mm und einer oberen Grenze von 0,3 mm, sodass diese Lötfolie besser handhabbar ist und zudem das Reibverhalten des Sinterbremsbelages durch dies Lötfolie nicht negativ beeinflusst wird.

Vorzugsweise wird eine Lötfolie verwendet, die eine Wandstärke aufweist, die ausgewählt ist aus einem Bereich mit einer unteren Grenze von 0,1 mm und einer oberen Grenze von 0,2 mm.

Ein Verhältnis der Sinterdichte des weiteren Sinterwerkstoffes zur Sinterdichte des ersten Sinterwerkstoffes kann ausgewählt sein aus Bereich von einer unteren Grenze von 0,9 : 1 und einer oberen Grenze von 1,15 :1, wodurch einerseits eine Verbesserung der mechanischen Stabilität des Sinterbremsbelages erreicht werden kann und andererseits das Verstärkungselement zwar am Reibverhalten des Sinterbremsbelages mitverantwortlich ist, allerdings die Hauptlast über das Reibelement an sich zur Verfügung gestellt wird.

Es ist weiters möglich, dass der weitere Sinterwerkstoff einen Reibkoeffizienten gegen Stahl aufweist, der um einen Faktor 1,05 bis 1,20 größer als ist, als der Reibkoeffizient gegen Stahl des ersten Sinterwerkstoffes, wodurch Verstärkungselemente mit geringerer Wandstärke verwendet werden können, und in weitere Folge, somit das eigentliche Reibverhalten durch das Reibelement an sich bestimmt wird.

Zum besseren Verständnis der Erfindung wird diese anhand der nachfolgenden Figuren und Beispiele näher erläutert.

Es zeigen jeweils in stark schematisch vereinfachter Darstellung:
- Fig. 1: eine Draufsicht auf einen rechten Bremsklotz;
- Fig. 2: einen Sinterbremsbelag in Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Zur Vermeidung von Wiederholungen wird für die folgende Beschreibung ausdrücklich auf obige Ausführungen Bezug genommen.

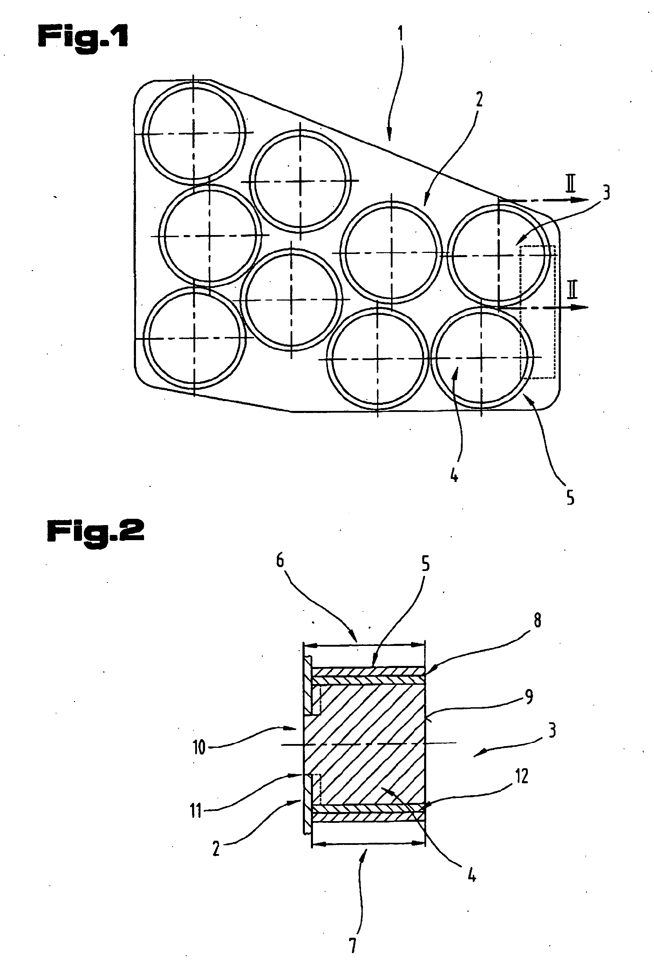

In Fig. 1 ist ein Bremsklotz 1 in Form einer rechten Bremsplatte dargestellt. Dieser Bremsklotz 1 kann hinsichtlich seiner geometrischen Außenabmessungen und seiner Gestalt dem Stand der Technik entsprechend ausgeführt sein, wie er z.B. in der DE 41 11 926 A1 dargestellt ist. Bevorzugt wird dieser Bremsklotz 1 in Scheibenbremssystemen von Schienenfahrzeugen, insbesondere von Hochgeschwindigkeitsschienenfahrzeugen, verwendet.

Der Bremsklotz 1 umfasst eine Tragplatte 2, auf deren Vorderseite, also jener Seite die im eingebauten Zustand der Bremsscheibe zugewandt ist, mehrere Sinterbremsbeläge 3 angeordnet sind, insbesondere mit der Tragplatte 2 verbunden sind. Auf der Rückseite der Tragplatte 2 kann eine Befestigungseinrichtung, wie z.B. ein Schwalbenschwanz, wie diese aus dem Stand der Technik bekannt ist, angeordnet sein.

Obwohl in dem Ausführungsbeispiel nach Fig. 1 diese Sinterbremsbeläge 3 mit einem runden Querschnitt dargestellt sind, besteht im Rahmen der Erfindung selbstverständlich die Möglichkeit andere Querschnittsformen, wie z.B. dreieckig, hexagonal, quadratisch, polygonal, trapezoid, etc. zu wählen.

Auch die Verteilung der Sinterbremsbeläge 3 über die Oberfläche der Tragplatte 2 ist durch die Darstellung des Bremsklotzes 1 in Fig. 1 nicht beschränkend auf diese zu sehen, sondern kann eine andere Verteilung ebenso wie eine andere Anzahl an Sinterbremsbelägen 3 auf der Tragplatte 2 gewählt werden, wobei sich dies nach dem jeweiligen Verwendungszweck des Bremsklotzes 1 bzw. des Sinterbremsbelages 3 richtet.

Die Sinterbremsbeläge 3 werden durch jeweils ein Reibelement 4 sowie ein Verstärkungselement 5 gebildet, wobei das Verstärkungselement 5 das Reibelement 4 an einer äußeren Oberfläche des Reibelementes 4 sich zumindest annähernd über die gesamte Höhe des Reibelementes 4 erstreckt. Mit zumindest annähernd ist dabei gemeint, dass, wie dies Fig. 2 zeigt, das Reibelement 4 bei dieser Ausführungsvariante der Erfindung eine Zylinderhöhe 6 aufweist, die größer ist als eine Überstandshöhe 7 des Reibelementes 4 über der Tragplatte 2. Jedenfalls ist eine Stirnfläche 8 des Verstärkungselementes 5 auf gleicher Höhe wie eine Reiboberfläche 9 des Reibelementes 4, welche im eingebauten Zustand des Bremsklotzes 1 mit der Oberfläche der Bremsscheibe zusammenwirkt.

Obwohl in Fig. 1 nur eine rechte Bremsplatte dargestellt ist, besteht im Rahmen der Erfindung selbstverständlich die Möglichkeit, diese auch als so genannte linke Bremsplatte auszubilden, welche im Wesentlichen spiegelbildlich zur rechten Bremsplatte ausgebildet ist.

Bei der Ausführungsvariante nach Fig. 2 des Sinterbremsbelages 3 weist die Tragplatte 2 pro Reibelement 4 eine Ausnehmung 10 auf, wobei diese Ausnehmung 10 durchgängig durch die Tragplatte 2 ausgebildet sein kann oder auch als Vertiefung, und ragt das Reibelement 4 in diese Ausnehmung 10, wozu das Reibelement 4 an seiner, der Oberfläche der Tragplatte 2 zugewandten Oberfläche einen entsprechenden an die Geometrie der Ausnehmung 10, d.h. deren Querschnitt, angepassten Fortsatz 11 aufweist. Es wird damit eine bessere Verbindung und Positionierung des Reibelementes 4 bzw. des Sinterbremsbelages 3 mit der Tragplatte 2 ermöglicht.

Des Weiteren ist aus dieser Ausführungsvariante ersichtlich, dass zwischen dem Reibelement 4 und dem Verstärkungselement 5 eine Lötfolie 12 angeordnet ist, mit der eine vollflächige Verbindung, über die gesamte Höhe, d. h., die gesamte Überstandshöhe 7, des Reibelementes 4 mit dem Verstärkungselement 5, insbesondere eine stoffschlüssige Verbindung, möglich ist.

Die Lötfolie 12 kann auch so ausgebildet sein, dass ihre Höhe größer gewählt ist, als die Überstandshöhe 7 und diese Lötfolie 12 an der der Tragplatte 2 zugewandten Oberfläche des Sinterreibbelages 3 vorsteht, sodass im befestigten Zustand des Sinterbremsbelages 3 an der Tragplatte 2 diese Lötfolie 12 umgebogen wird und somit zumindest annähernd parallel zur Tragplatte 2 verläuft, wie dies in Fig. 2 strichliert angedeutet ist, und damit es möglich wird, über diese Lötfolie 12 zusätzlich eine Verbindung mit der Tragplatte 2 herzustellen. Gegebenenfalls kann sich diese Lötfolie 12 auch bis in den Bereich-der Ausnehmung 10 erstrecken.

Es kann also mit dieser Lötfolie 12 die direkte Anbindung des Sinterbremsbelages 3 an der Tragplatte 2 erfolgen, sodass auf zusätzliche Schweißungen, etc., verzichtet werden kann.

In Umkehrung zum Ausführungsbeispiel nach Fig. 2 besteht die Möglichkeit, dass diese Lötfolie 12, d.h., der über die Überstandshöhe 7 vorstehende Überstand der Lötfolie 12, nicht unterhalb des Reibelementes 4 verläuft, sondern um 180° gedreht nach außen über den Sinterbremsbelag 3 vorstehend an der Tragplatte 2 angeordnet ist.

Es ist weiters möglich, dass die Länge des Überstandes der Lötfolie 2 unterschiedlich gewählt werden kann, sodass sich also diese Lötfolie 12 auch nur über einen Teilbereich der Tragplatte 2 unterhalb des Sinterbremsbelages 3 nach Fig. 2 erstrecken kann.

Das Reibelement 4 besteht aus einem ersten Sinterwerkstoff, wie diese bereits aus dem Stand der Technik bekannt sind. Es kann z.B. folgende typische Zusammensetzung aufweisen.

| | |
|---|---|
| 60,0 - 80,0 Masse-% | Kupfer |
| 0 - 5,0 Masse-% | Eisen |
| 5,0 - 10,0 Masse-% | synthetische Grafit |
| 2,0 - 10,0 Masse-% | Naturgrafit |
| 5,0 - 15,0 Masse-% | Hartstoff (z. B.: Silikate, Karbide, Oxide, Eisenlegierungen) |

Ein typischer Vertreter aus dieser Gruppe ist die Belagqualität MD 550 hergestellt von der Anmelderin.

Auch das Verstärkungselement 5 ist erfindungsgemäß aus einem weiteren Sinterwerkstoff gebildet, entsprechend obiger Ausführung.

Zur Herstellung dieses Sinterbremsbelages 3 ist es möglich, das Verstärkungselement 5 pulvermetallurgisch getrennt vom Reibelement 4 herzustellen, und dieses Verstärkungselement 5 über das Reibelement 4 unter Zwischenanordnung der Lötfolie 12 zu schieben.

Andererseits besteht auch die Möglichkeit, nachdem sowohl das Verstärkungselement 5 als auch das Reibelement 4 jeweils aus einem Sinterwerkstoff gebildet sind, dass zunächst in einem ersten Schritt das Verstärkungselement 5 pulvermetallurgisch zu einem Grünling hergestellt wird, in der Folge in die durch das Verstärkungselement 5 definierte Ausnehmung das Pulver für das Reibelement 4 eingehüllt wird und verpresst wird zu einem Grünling für den Sinterbremsbelag 3, der in Folge gesintert wird, sodass also das Verstärkungselement 5 mit dem Reibelement 4 auch versintert sein kann ohne die Zwischenanordnung der Lötfolie 12. Bevorzugt wird jedoch die Ausbildung mit der Anordnung der Lötfolie 12, um eine bessere Verbindung zwischen Reibelement 4 und dem Verstärkungsring 5 zu erreichen.

Diese Lötfolie 12 ist bevorzugt so abgestimmt, dass während des eigentlichen Lötprozesses von Reibelement 4 und Verstärkungselement 5 auf die Trägerplatte 2 nun zusätzlich das Reibelement 4 mit dem Verstärkungselement 5 verlötet werden kann. Dies hat den Vorteil, dass sich die Ausdehnungskoeffizienten des Reibelementes 4 und des Verstärkungselementes 5 unterscheiden können, also kein Schrumpfsitz mehr nötig ist.

Als Lote werden bevorzugt Hochtemperaturlote verwendet, bspw. auf Kupferbasis, Kupfer-Zink-Lote oder Edelmetalllote. Bevorzugt wird aber eine Lötfolie 12 verwendet, die mindestens so lange bzw. hoch ist, dass gewährleistet ist, dass sich über den gesamten Spalt zwischen Verstärkungselement 5 und Reibelement 4 eine Lötfolie 12 befindet und somit eine vollflächige Verlötung dieser beiden Elemente miteinander ermöglicht wird.

Die Erfindung hat weiters des Vorteil, dass die Zusammensetzung des weiteren Sinterwerkstoffes für das Verstärkungselement 5 an das jeweilige Reibelement 4, welches hiervon umschlossen wird, den jeweiligen geforderten Reib- und Verschleißeigenschaften angepasst, zusammengesetzt werden kann, wobei diese auf pulvermetallurgischem Wege einfach hergestellt werden können.

Es wurden folgende Ausführungsbeispiele an Verstärkungselementen 5, insbesondere Verstärkungsringen, hergestellt.

| | |
|---|---|
| Ausführungsbeispiel 1: | 50 Gew.-% Kupfer |
| | 25 Gew.-% Messing |
| | 15 Gew.-% Eisen |
| | 3 Gew.-% Mangansulfid |
| | 7 Gew.-% Aluminiumoxid |
| | |
| Ausführungsbeispiel 2: | 50 Gew.-% Kupfer |
| | 15 Gew.-% Bronze |
| | 15 Gew.-% Messing |
| | 15 Gew.-% Eisen |
| | 5 Gew.-% Quarzsand |
| | |
| Ausführungsbeispiel 3: | 70 Gew.-% Kupfer |
| | 20 Gew.-% Eisen |
| | 3 Gew.-% Wolframsulfid |
| | 7 Gew.-% Siliziumkarbid |
| | |
| Ausführungsbeispiel 4: | 65 Gew.-% Kupfer |
| | 20 Gew.-% Messing |
| | 5 Gew.-% Molybdändisulfid |
| | 10 Gew.-% Aluminiumoxid |

Es sei an dieser Stelle erwähnt, dass die Verwendung eines Festschmierstoffes nicht zwingend erforderlich ist und somit der Anteil an den Abrasivstoffen bzw. Hartpartikeln entsprechend dem Anteil des Festschmierstoffes bei den obigen Ausführungsbeispielen 1, 3 und 4 erhöht sein kann.

Zur Herstellung dieser Verstärkungselemente 5 wurden die jeweiligen Pulver miteinander vermischt, und in der Folge in einer Pressmatrize bei einem Druck zwischen 200 bis 800 MPa (max. 1100 MPa) unidirektional zu einem Grünling verpresst.

Anstelle des unidirektionalen Verpressens ist es auch möglich, diesen Grünling durch bidirektionales oder isostatisches Verpressen herzustellen.

Diese Grünlinge wurden in der Folge bei einer Temperatur zwischen 900 °C bis 1050 °C gesintert.

Der Ordnung halber sei abschließend darauf hingewiesen, dass zum besseren Verständnis des Aufbaus des Sinterbremsbelages 3 bzw. des Bremsklotzes 1 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1 und 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Bremsklotz
- 2: Tragplatte
- 3: Sinterbremsbelag
- 4: Reibelement
- 5: Verstärkungselement
- 6: Zylinderhöhe
- 7: Überstandshöhe
- 8: Stirnfläche
- 9: Reiboberfläche
- 10: Ausnehmung
- 11: Fortsatz
- 12: Lötfolie

## Patentansprüche

1. Sinterbremsbelag (3) mit einem zylinderförmigen Reibelement (4) aus einem ersten Sinterwerkstoff, der eine äußere Zylinderoberfläche und eine Zylinderhöhe (6) aufweist, sowie mit einem das Reibelement (4) einfassendes Verstärkungselement (5), das an der äußeren Zylinderoberfläche angeordnet ist und sich zumindest annähernd über die gesamte Zylinderhöhe (6) erstreckt wobei eine Stirnfläche (8) des Verstärkungselementes (5) auf gleicher Höhe wie eine Reiboberfläche (9) des Reibelementes (4) ist, welche im eingebauten Zustand des Bremsklotzes 1 mit der Oberfläche der Bremsscheibe zusammenwirkt, und wobei das Verstärkungselement (5) aus einem weiteren Sinterwerkstoff mit einer metallischen Matrix gebildet ist, **dadurch gekennzeichnet, dass** in der metallischen Matrix des weiteren Sinterwerkstoffes des Verstärkungselementes (5) zumindest ein Abrasivstoff enthalten ist und der weitere Sinterwerkstoff eine höhere, Festigkeit aufweist als der erste Sinterwerkstoff des Reibelementes (4).

2. Sinterbremsbelag (3) nach Anspruch 1, **dadurch gekennzeichnet, dass** der Anteil des Abrasivstoffes bzw. der Abrasivstoffe an dem weiteren Sinterwerkstoff ausgewählt ist aus einem Bereich mit einer unteren Grenze von 1 Gew.-% und einer oberen Grenze von 20 Gew.%.

3. Sinterbremsbelag (3) nach Anspruch 1 oder 2, **dadurch gekennzeichnet, dass** der zumindest eine Abrasivstoff ausgewählt ist aus einer Gruppe umfassend Karbide, wie Siliziumkarbid oder Titankarbid, Oxide, wie Korund oder Chromoxid (Cr₂O₃) oder Zirkoniumoxid, Silikate, wie Quarzsand, sowie Mischungen daraus.

4. Sinterbremsbelag (3) nach einem der vorhergehenden Ansprüche, **dadurch gekennzeichnet, dass** der Anteil der metallischen Matrix am weiteren Sinterwerkstoff mindestens 75 Gew.-% beträgt.

5. Sinterbremsbelag (3) nach einem der vorhergehenden Ansprüche, **dadurch gekennzeichnet, dass** die metallische Matrix durch zumindest ein Metall oder eine Metalllegierung gebildet ist, das bzw. die eine Härte nach Rockwell aufweist, die ausgewählt ist aus einem Bereich mit einer unteren Grenze von 55 HRR und einer oberen Grenze von 90 HRR.

6. Sinterbremsbelag (3) nach einem der vorhergehenden Ansprüche, **dadurch gekennzeichnet, dass** die metallische Matrix aus zumindest einem Element aus einer Gruppe umfassend Kupfer, Eisen, oder Legierungen mit Zink oder Zinn, wie Messing oder Bronze, und Mischungen daraus gebildet ist.

7. Sinterbremsbelag (3) nach einem der vorhergehenden Ansprüche, **dadurch gekennzeichnet, dass** das Verstärkungselement (5) eine Wandstärke aufweist, die ausgewählt ist aus einem Bereich mit einer unteren Grenze von 2 mm und einer oberen Grenze von 10 mm.

8. Sinterbremsbelag (3) nach einem der vorhergehenden Ansprüche, **dadurch gekennzeichnet, dass** zumindest ein Anteil des Abrasivstoffes durch zumindest einen Festschmierstoff ersetzt ist.

9. Sinterbremsbelag (3) nach Anspruch 8, **dadurch gekennzeichnet, dass** der Festschmierstoff ausgewählt ist aus einer Gruppe umfassend Sulfide, wie Molybdändisulfid, Wolframsulfid, Mangansulfid, Zinnsulfid, Kupfersulfid, sowie Mischungen daraus.

10. Sinterbremsbelag (3) nach Anspruch 8 oder 9, **dadurch gekennzeichnet, dass** der Anteil des zumindest einen Festschmierstoffes am weiteren Sinterwerkstoff ausgewählt ist aus einem Bereich mit einer unteren Grenze von 1 Gew.-% und einer oberen Grenze von 7 Gew.%.

11. Sinterbremsbelag (3) nach einem der vorhergehenden Ansprüche, **dadurch gekennzeichnet, dass** das Verstärkungselement (5) stoffschlüssig, insbesondere vollflächig, mit dem Reibelement (4) verbunden ist.

12. Sinterbremsbelag (3) nach Anspruch 11, **dadurch gekennzeichnet, dass** der Stoffschluss durch Verlöten des Reibelementes (4) mit dem Verstärkungselement (5) hergestellt ist, wobei ein folienartig ausgebildetes Lot zwischen dem Reibelement (4) und dem Verstärkungselement (5) angeordnet ist.

13. Sinterbremsbelag (3) nach Anspruch 12, **dadurch gekennzeichnet, dass** das folienartig ausgebildete Lot eine Höhe aufweist, die größer ist als die Zylinderhöhe (6).

14. Sinterbremsbelag (3) nach Anspruch 12 oder 13, **dadurch gekennzeichnet, dass** das folienartig ausgebildete Lot eine Wandstärke aufweist, die ausgewählt ist aus einem Bereich mit einer unteren Grenze von 0,05 mm und einer oberen Grenze von 0,3 mm.

15. Sinterbremsbelag (3) nach einem der vorhergehenden Ansprüche, **dadurch gekennzeichnet, dass** ein Verhältnis einer Sinterdichte des weiteren Sinterwerkstoffes zur Sinterdichte des ersten Sinterwerkstoffes ausgewählt ist aus einem Bereich mit einer unteren Grenze von 0,85 : 1 und einer oberen Grenze von 1,15 : 1.

16. Sinterbremsbelag (3) nach einem der vorhergehenden Ansprüche, **dadurch gekennzeichnet, dass** der weitere Sinterwerkstoff einen Reibkoeffizienten gegen Stahl aufweist, der um einen Faktor größer ist als der Reibkoeffizient gegen Stahl des ersten Sinterwerkstoffes, der ausgewählt aus einem Bereich mit einer unteren Grenze von 1,05 und einer oberen Grenze von 1,20.

17. Bremsklotz (1) umfassend eine Tragplatte (2) auf der mehrere Sinterbremsbeläge (3) befestigt sind, **dadurch gekennzeichnet, dass** die Sinterbremsbeläge (3) nach einem der vorhergehenden Ansprüche gebildet sind.

18. Schienenfahrzeugscheibenbremse umfassend zumindest eine Bremsscheibe und zumindest einen Bremsklotz (1), **dadurch gekennzeichnet, dass** der Bremsklotz (1) nach Anspruch 17 gebildet ist.

## Claims

1. Sintered brake lining (3) with a cylindrical friction element (4) made from a first sintered material, which has an external cylinder surface and a cylinder height (6), and with a reinforcing element (5) enclosing the friction element (4) which is disposed on the external cylinder surface and extends at least approximately across the entire cylinder height (6), and an end face (8) of the reinforcing element (5) is disposed at the same height as a friction surface (9) of the friction element (4) which co-operates with the surface of the brake disc when the brake block (1) is in the assembled state, and the reinforcing element (5) is made from another sintered material with a metal matrix, wherein at least one abrasive substance is contained in the metal matrix of the other sintered material of the reinforcing element (5) and the other sintered material is of a higher strength than the first sintered material of the friction element (4).

2. Sintered brake lining (3) according to claim 1, wherein the proportion of abrasive substance or abrasive substances in the other sintered material is selected from a range with a lower limit of 1 % by weight and an upper limit of 20 % by weight.

3. Sintered brake lining (3) according to claim 1 or 2, wherein the at least one abrasive substance is selected from a group comprising carbides, such as silicium carbide or titanium carbide, oxides, such as corundum or chromium oxide (Cr₂O₃) or zirconium oxide, silicates, such as quartz sand, and mixtures thereof.

4. Sintered brake lining (3) according to one of the preceding claims, wherein the proportion of metal matrix in the other sintered material is at least 75 % by weight.

5. Sintered brake lining (3) according to one of the preceding claims, wherein the metal matrix is provided in the form of at least one metal or a metal alloy which has a Rockwell hardness selected from a range with a lower limit of 55 HRR and an upper limit of 90 HRR.

6. Sintered brake lining (3) according to one of the preceding claims, wherein the metal matrix is made up of at least one element selected from a group comprising copper, iron, or alloys with zinc or tin, such as brass or bronze, and mixtures thereof.

7. Sintered brake lining (3) according to one of the preceding claims, wherein the reinforcing element (5) has a wall thickness selected from a range with a lower limit of 2 mm and an upper limit of 10 mm.

8. Sintered brake lining (3) according to one of the preceding claims, wherein at least a proportion of the abrasive substance is replaced by at least one solid lubricant.

9. Sintered brake lining (3) according to claim 8, wherein the solid lubricant is selected from a group comprising sulfides, such as molybdenum sulfide, tungsten sulfide, manganese sulfide, tin sulfide, copper sulfide, and mixtures thereof.

10. Sintered brake lining (3) according to claim 8 or 9, wherein the proportion of the at least one solid lubricant in the other sintered material is selected from a range with a lower limit of 1 % by weight and an upper limit of 7 % by weight.

11. Sintered brake lining (3) according to one of the preceding claims, wherein the reinforcing element (5) is connected to the friction element (4) by a material join, in particular by its full surface.

12. Sintered brake lining (3) according to claim 11, wherein the material join is produced by soldering the friction element (4) to the reinforcing element (5), and a film-type soldered joint is formed between the friction element (4) and the reinforcing element (5).

13. Sintered brake lining (3) according to claim 12, wherein the film-type soldered joint has a height which is bigger than the cylinder height (6).

14. Sintered brake lining (3) according to claim 12 or 13, wherein the film-type soldered joint has a wall thickness selected from a range with a lower limit of 0.05 mm and an upper limit of 0.3 mm.

15. Sintered brake lining (3) according to one of the preceding claims, wherein a ratio of a sintered density of the other sintered material to the sintered density of the first sintered material is selected from a range with a lower limit of 0.85 : 1 and an upper limit of 1.15 : 1.

16. Sintered brake lining (3) according to one of the preceding claims, wherein the other sintered material has a coefficient of friction with respect to steel that is higher than the coefficient of friction with respect to the first sintered material by a factor selected from a range with a lower limit of 1.05 and an upper limit of 1.20.

17. Brake block (1) comprising a base plate (2) to which several sintered brake linings (3) are secured, wherein the sintered brake linings (3) are as claimed in one of the preceding claims.

18. Track-bound vehicle disc brake comprising at least one brake disc and at least one brake block (1), wherein the brake block (1) is as claimed in claim 17.

## Revendications

1. Garniture de frein frittée (3) avec un élément de frottement cylindrique (4) en un premier matériau de frittage, qui présente une surface de cylindre extérieure et une hauteur de cylindre (6), et avec un élément de renforcement (5) entourant l'élément de frottement (4), qui est disposé à la surface de cylindre extérieure et qui s'étend au moins approximativement sur toute la hauteur de cylindre (6), où une face frontale (8) de l'élément de renforcement (5) est à la même hauteur qu'une surface de frottement (9) de l'élément de frottement (4) qui, à l'état monté du sabot de frein (1), coopère avec la surface du disque de freinage, et où l'élément de renforcement (5) est réalisé en un autre matériau de frittage avec une matrice métallique, **caractérisée en ce que** la matrice métallique de l'autre matériau de frittage de l'élément de renforcement (5) contient au moins une matière abrasive, et que l'autre matériau de frittage a une solidité plus élevée que le premier matériau de frittage de l'élément de frottement (4).

2. Garniture de frein frittée (3) selon la revendication 1, **caractérisée en ce que** la part de la matière abrasive respectivement des matières abrasives dans l'autre matériau de frittage est sélectionnée dans une plage d'une limite inférieure de 1% en poids et d'une limite supérieure de 20% en poids.

3. Garniture de frein frittée (3) selon la revendication 1 ou 2, **caractérisée en ce que** la au moins une matière abrasive est sélectionnée d'un groupe comprenant des carbures, comme le carbure de silicium et le carbure de titane, des oxydes comme le corindon ou l'oxyde de chrome (Cr₂O₃) ou l'oxyde de zirconium, des silicates, comme le sable silicieux ainsi que leurs mélanges.

4. Garniture de frein frittée (3) selon l'une des revendications précédentes, **caractérisée en ce que** la part de la matrice métallique dans l'autre matériau de frittage représente au moins 75% en poids.

5. Garniture de frein frittée (3) selon l'une des revendications précédentes, **caractérisée en ce que** la matrice métallique est formée par au moins un métal ou un alliage métallique qui présente une dureté de Rockwell qui est sélectionnée dans une plage d'une limite inférieure de 55 HRR et d'une limite supérieure de 90 HRR.

6. Garniture de frein frittée (3) selon l'une des revendications précédentes, **caractérisée en ce que** la matrice métallique est formée par au moins un élément du groupe comprenant le cuivre, le fer ou des alliages avec du zinc ou de l'étain, comme le laiton ou le bronze et leurs mélanges.

7. Garniture de frein frittée (3) selon l'une des revendications précédentes, **caractérisée en ce que** l'élément de renforcement (5) présente une épaisseur de paroi qui est sélectionnée dans une plage d'une limite inférieure de 2 mm et d'une limite supérieure de 10 mm.

8. Garniture de frein frittée (3) selon l'une des revendications précédentes, **caractérisée en ce qu'**au moins une part de la matière abrasive est remplacée par au moins un lubrifiant solide.

9. Garniture de frein frittée (3) selon la revendication 8, **caractérisée en ce que** le lubrifiant solide est sélectionné dans un groupe comprenant des sulfures, comme le sulfure de molybdène, le sulfure de tungstène, le sulfure de manganèse, le sulfure d'étain, le sulfure de cuivre et leurs mélanges.

10. Garniture de frein frittée (3) selon la revendication 8 ou 9, **caractérisée en ce que** la part d'au moins un lubrifiant solide dans l'autre matériau de frittage est sélectionnée dans une plage ayant une limite inférieure de 1 % en poids et une limite supérieure de 7% en poids.

11. Garniture de frein frittée (3) selon l'une des revendications précédentes, **caractérisée en ce que** l'élément de renforcement (5) est relié par matière, en particulier sur toute sa face, à l'élément de frottement (4).

12. Garniture de frein frittée (3) selon la revendication 11, **caractérisée en ce que** la concordance par matières est réalisée par le brasage de l'élément de frottement (4) avec l'élément de renforcement (5), où un lot réalisé en forme de feuille est disposé entre l'élément de frottement (4) et l'élément de renforcement (5).

13. Garniture de frein frittée (3) selon la revendication 12, **caractérisée en ce que** le lot réalisé en forme de feuille présente une hauteur qui est plus grande que la hauteur de cylindre (6).

14. Garniture de frein frittée (3) selon la revendication 12 ou 13, **caractérisée en ce que** le lot réalisé en forme de feuille présente une épaisseur de paroi qui est sélectionnée dans une plage d'une limite inférieure de 0,05 mm et d'une limite supérieure de 0,3 mm.

15. Garniture de frein frittée (3) selon l'une des revendications précédentes, **caractérisée en ce qu'**un rapport d'une densité de frittage de l'autre matériau de frittage à la densité de frittage du premier matériau de frittage est sélectionné dans une plage ayant une limite inférieure de 0,85:1 et une limite supérieure de 1,15:1.

16. Garniture de frein frittée (3) selon l'une des revendications précédentes, **caractérisée en ce que** l'autre matériau de frittage présente un coefficient de frottement relativement à l'acier qui est d'un facteur plus grand que le coefficient de frottement contre l'acier du premier matériau de frittage, qui est sélectionné dans une plage ayant une limite inférieure de 1,05 et une limite supérieure de 1,20.

17. Sabot de frein (1) comprenant une plaque de support (2) sur laquelle sont fixées plusieurs garnitures de frein frittées (3) **caractérisé en ce que** les garnitures de frein frittées (3) sont réalisées selon l'une des revendications précédentes.

18. Frein à disque pour véhicule sur rails comprenant au moins un disque de freinage et au moins un sabot de frein (1), **caractérisé en ce que** le sabot de frein (1) est réalisé selon la revendication 17.
